# EUROPÄISCHE PATENTSCHRIFT

(11) **EP 1 609 228 B1**
(45) Veröffentlichungstag und Bekanntmachung des Hinweises auf die Patenterteilung: **23.04.2008**
(21) Anmeldenummer: 03773511.5
(22) Anmeldetag: 13.10.2003
(51) Int. Cl.: H02K 5/15

(54) **ELEKTRISCHE MASCHINE MIT IN DEN STATOR INTEGRIERTER ROTORLAGERUNG**
ELECTRICAL MACHINE WITH A ROTOR BEARING THAT IS INTEGRATED INSIDE THE STATOR
MACHINE ELECTRIQUE A PALIER DE ROTOR INTEGRE DANS LE STATOR

(30) Priorität: 21.03.2003 DE 10312614
(43) Veröffentlichungstag der Anmeldung: 28.12.2005
(73) Patentinhaber: ROBERT BOSCH GMBH, 70442 Stuttgart (DE)
(72) Erfinder: HUSSAM, Helmi, 71672 Marbach (DE)
(86) Internationale Anmeldenummer: PCT/DE2003/003392
(87) Internationale Veröffentlichungsnummer: WO 2004/086591

(56) Entgegenhaltungen:
- EP-A- 1 018 796
- DE-A- 4 021 599
- US-A- 2 462 204
- US-A- 5 068 556

## Beschreibung

### Technisches Gebiet

Bei Elektromotoren wird der Läufer (Rotor) durch Lagersitze im Gehäuse oder im Gehäusedeckel (Motorschild) gelagert. Das der Rotor umschließende Gehäuse sowie der Gehäusedeckel (Motorschild) weisen demzufolge Lagersitze für die drehbare Lagerung des Läufers (Rotor) auf.

### Stand der Technik

Bei heute eingesetzten Elektromotoren werden im Gehäuse und im das Gehäuse verschließenden Gehäusedeckel, der auch als Motorschild bezeichnet wird, Lagersitze vorgesehen, in welchen die den Rotor des Elektromotors aufnehmenden Wälzlager eingesetzt werden. Bei den Wälzlagern kann es sich sowohl um Kugel- als auch um Rollenlager sowie auch um kombinierte Axial/Radiallager handeln, was jeweils abhängig vom Einsatzzweck des Elektromotors ist. Das Vorsehen von Lagersitzen im Gehäuse oder im Gehäusedeckel (Motorschild) eines Elektromotors stellt hohe Anforderungen an die Maßhaltigkeit der Bauteile und bedeutet einen relativ hohen fertigungstechnischen Aufwand zur Realisierung einer möglichst konzentrischen Lagerung des Rotors relativ zum Stator des Elektromotors. Unter den Betriebsbedingungen des Elektromotors soll der Rotor gegenüber der Statorbohrung einen möglichst konzentrisch verlaufenden Luftspalt aufweisen. Bei der Montage des Elektromotors wird der Stator in der Regel in das zylindrische Gehäuse eingeschrumpft. Der Paßsitz zwischen dem Gehäuse und dem dieses verschließenden Gehäusedeckel (Motorschild) verursacht Positionsfehler zur Rotorachse, die oftmals ein zusätzliches Ausschleifen der Statorbohrung sowie ein nachträgliches Abdrehen des Statoraußendurchmessers erfordern, um die erforderliche Maßhaltigkeit bezüglich eines konzentrischen Luftspaltes zwischen der Außenseite des Rotors und der Innenseite der Statorbohrung zu erzielen.

Die Nachbearbeitung der Statorbohrung bzw. des Rotoraußendurchmessers stellt einerseits einen weiteren fertigungstechnischen Aufwand dar, um die Konzentrizität des Luftspaltes zwischen dem Rotor und der Statorbohrung eines Elektromotors herbeizuführen. Der Luftspalt hat bei einer elektrischen Maschine andererseits erheblichen Einfluss auf den sich einstellenden Wirkungsgrad.

Die ergriffenen Maßnahmen zur Gewährleistung eines konzentrischen Luftspaltes zwischen dem Außendurchmesser des Rotors und dem Innendurchmesser der Statorbohrung durch zusätzliches Ausschleifen bzw. nachträgliches Überdrehen bieten zwar eine Möglichkeit, den Luftspalt einer elektrischen Maschine konzentrisch zu gestalten, jedoch stellt diese Abhilfemöglichkeit eine äußerst unbefriedigende, zeitaufwendige Maßnahme dar, die bei der Großserienproduktion von Elektromotoren sehr nachteilig ist.

Mit der US 2 462 204 ist ein Elektromotor bekannt geworden, bei dem der Rotor mittels Kugellager über ein Lagerschild am Stator gelagert wird. Dabei stützt sich das Lagerschild an der Innenbohrung des Stators ab.

Die US 5 068 556 zeigt ebenfalls einen Elektromotor, bei dem der Rotor mit auf der Rotorwelle angeordneten Lagern mittels eines Lagerschilds am Stator gelagert ist. Dabei weist der Stator an seinen Innenbohrungen Aussparungen auf, in die ein axialer Fortsatz des Lagerschilds eingreift.

Mit der EP 1 018 796 A2 ist ein Elektromotor bekannt geworden, bei dem der Rotor mittels Lager über ein Lagerschild am Stator gelagert wird. Dabei stützt sich das Lagerschild an der Außenbohrung des Stators ab.

### Darstellung der Erfindung

Die erfindungsgemäß vorgeschlagene Lösung, die Lagerung des Rotors in den Stator der elektrischen Maschinen zu integrieren, ermöglicht einerseits in fertigungstechnischer Hinsicht eine Reduzierung des Luftspaltes zwischen dem Außendurchmesser des Rotors und dem Innendurchmesser der Statorbohrung. Dies beeinflusst den elektrischen Wirkungsgrad einer solcher Art beschaffenen elektrischen Maschine sehr günstig, da die Toleranzkette der beteiligten Bauteile minimiert wird und nunmehr beim Fügen der Bauteile Gehäusedeckel (Motorschild) und Gehäuse sich einstellende Toleranzen keinen Einfluss mehr auf die sich zwischen dem Außendurchmesser des Rotors und dem Innendurchmesser der Statorbohrung ausbildenden Luftspalt haben.

Gegenüber bekannten Lagerungsvarianten des Rotors einer elektrischen Maschine im Gehäuse, bildet die erfindungsgemäße Lösung der Rotorlagerung im Stator bereits eine eigene Montageeinheit, die innerhalb des Fertigungsprozesses einer elektrischen Maschine eine Überprüfung des Luftspaltes durch Freilauf der Rotorwelle vor dem Verschließen des Gehäuses ermöglicht, d.h. vor der Montage der vormontierten Stator/Rotoreinheit in das Gehäuse einer elektrischen Maschine.

Die vorgeschlagene Lösung ermöglicht eine höhere Maßhaltigkeit hinsichtlich der Konzentrizität und Winkelfehler des Rotors relativ zu der diesen umschließenden Statorbohrung. Bei bisherigen Auslegungen wurden aufgrund der Streifgefahr, d.h. eines möglichen mechanischen Kontaktes zwischen Rotor und Stator, die Toleranzen hinsichtlich der Gehäuselagerung größer ausgelegt, so dass der sich einstellende Luftspalt größer ausfiel. Bei Einsatz der erfindungsgemäßen Lösung bei Auslegung einer Asynchronmaschine beispielsweise, lässt sich konstruktiv bereits ein reduzierter, von der Toleranzkette weitestgehend unäbhängiger konzentrischer Luftspalt erreichen.

### Zeichnung

Es zeigt:
- Figur 1: ein erstes Beispiel einer in den Stator eines Elektromotors integrierten Rotorlagerung, welches das Verständnis der Erfindung erleichtert
- Figur 2: ein zweites Beispiel einer in den Stator eines Elektromotors integrierten Rotorlagerung welches das Verständnis der Erfindung erleichtert
- Figur 3: eine Darstellung der in den Stator integrierten Rotorlagerung in einem vergrößerten Maßstab.

### Beispiele

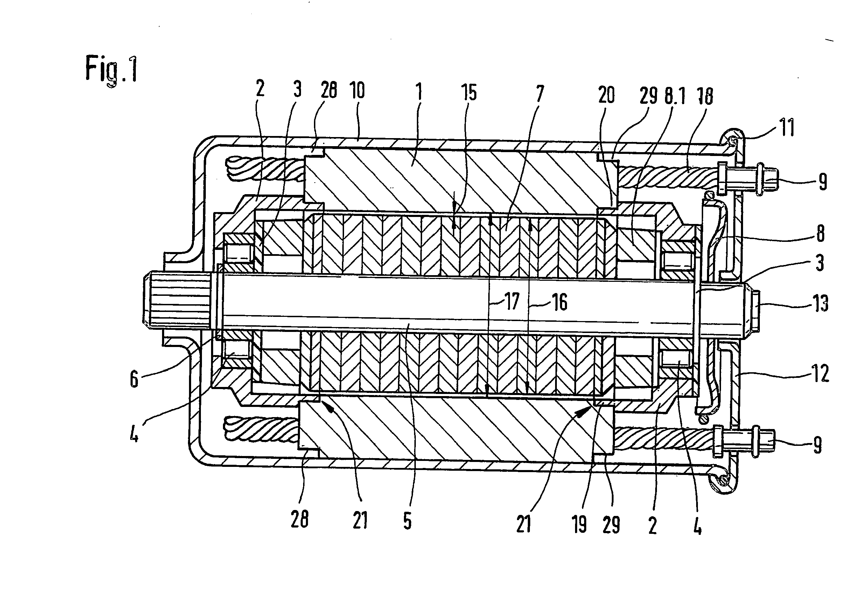

Figur 1 zeigt das erste Beispiel einer in den Stator integrierten Rotorlagerung in einer als Elektromotor ausgebildeten elektrischen Maschine.

Die in Figur 1 im Längsschnitt dargestellte elektrische Maschine umfasst einen Stator 1, der in einem im wesentlichen zylindrischen Gehäuse 10 aufgenommen ist, welches mittels eines Gehäusedeckels 12 (Motorschild) verschlossen ist. Der Stator 1 umfasst an seinen Stirnseiten an der Statorbohrung jeweils stirnseitige Senkungen 20 oder am Statoraußendurchmesser stirnseitige Senkungen 28,29, die beispielsweise als in Umfangsrichtung verlaufende Ringnuten 19 ausgebildet sein können. An beiden Stirnseiten des vom zylindrisch konfigurierten Gehäuse 10 umschlossenen Stators 1 ist in die Senkungen 20 jeweils ein Lagerring 2 eingelassen. Der Lagerring 2 weist einen Lagersitz 21 auf, in welchem ein Wälzlager 4 aufgenommen ist. Bei dem Wälzlager 4 kann es sich sowohl um ein Kugellager als auch um ein Rollenlager oder auch ein kombiniertes Kegelrollenlager handeln, welches sowohl Axial- als auch Radialkräfte aufzunehmen vermag. In den Wälzlagern 4, die von den Lagerringen 2 umschlossen sind, ist ein Rotor 7 der elektrischen Maschine drehbar gelagert. Der Rotor 7 umfasst eine Welle 5, die das Gehäuse 10 des Elektromotors an dessen beiden Stirnseiten durchsetzt und an dem Ende, welches den Gehäusedeckel 12 (Motorschild) durchsetzt, eine Magnetscheibe 13 aufweist. Die Magnetscheibe 13 dient zur Drehzahlerfassung der Welle 5 des Rotors 7.

Im Bereich der Lagerringe 2 sind Isolierscheiben 3 angeordnet, die die Bleche beziehungsweise den Kurzschlussring 8.1 des Rotors 7 von den Wälzlagern 4 trennen. Bei ausreichendem Abstand zwischen dem Kurzschlussring 8.1 und den Wälzlagern 4 kann auf den Einbau von Isolierscheiben 3 verzichtet werden. Die von den Lagerringen 2 jeweils umschlossenen Wälzlager 4 werden über Sicherungsringe 6, die auf der Welle 5 des Rotors 7 aufgenommen sind, in ihrer axialen Position gesichert. Über den Kurzschlussring 8 sind die einzelnen Phasen der Wicklungen des Stators 1 kurzschließbar. Die Wicklungen des Stators 1 sind über Kontaktstifte 5 bestrombar, welche den Gehäusedeckel 12 (Motorschild) der elektrischen Maschine durchsetzen.
Die die Wicklungen des Stators 1 bestromenden Kontaktstifte 9 durchsetzen den Gehäusedeckel 12. Das den Stator 1 der elektrischen Maschine umschließende Gehäuse 10 umfasst eine Runddichtung 11, mit der der zylindrische Teil des Gehäuses 10 des Elektromotors mit dem Gehäusedeckel 12 (Motorschild) verbunden ist.

Der Luftspalt, durch welchen der Rotor 7 von der Innenumfangsfläche des Stators 1 getrennt ist, ist mit Bezugszeichen 15 gekennzeichnet. Der Luftspalt 15 wird einerseits durch den Außendurchmesser 16 des Rotors 7 und andererseits durch den Innendurchmesser 17 der Bohrung des Stators 1 definiert.

Die in Figur 1 im Längsschnitt dargestellte Lagerung ist an den Stirnseiten des Stators 1 durch die die Lagerringe 2 jeweils aufnehmenden Senkungen 20 beziehungsweise 28,29 ausgebildet. Durch diese Lösung können der Stator 1 und der Rotor 7 als in das Gehäuse 10 des Elektromotors vormontierbare Einheit gefügt werden, wobei bereits im Fertigungsprozess eine Überprüfung des Luftspaltes 15 hinsichtlich des freien Laufes des Rotors 7 in der Innenbohrung des Stators 1 vor dem Verschließen des Gehäuses 10 ermöglicht wird. Konstruktiv kann beispielsweise bei einem als Asynchronmaschine ausgebildeten Elektromotor ein reduzierter Luftspalt realisiert werden. Die Toleranzkette der erfindungsgemäß vorgeschlagenen Lösung ist im Vergleich zu bisherigen Lösungen wesentlich verkürzt und umfasst nur die Toleranz, mit der die Senkungen 20,28,29 an den Stirnseiten des Stators 1 ausgebildet sind sowie die Maßhaltigkeit der die Wälzlager für die Welle 5 aufnehmenden Lagerringe 2 an beiden Stirnseiten des Stators 1 der elektrischen Maschine. Aufgrund der Reduzierung der Toleranzkette ist eine höhere Maßhaltigkeit hinsichtlich der Konzentrizität und der Winkelfehler des Rotors 7 relativ zur Innenbohrung des Stators 1 erreichbar. Die im Längsschnitt dargestellte Integration der Rotorlagerung in den Stator 1 der elektrischen Maschine ermöglicht einen wirtschaftlichen Serieneinsatz bei der Fertigung von Elektromotoren.

In vorteilhafter Weise können die Senkungen 20 oder die Senkungen 28,29 in den Außenbereichen der Stirnseiten des Stators 1 bei der Herstellung eines Lamellenpaketes am Stator 1 im Stanzprozess gleichzeitig hergestellt werden. In die Lagerringe 2, die entweder in die an den Innenseiten des Stators ausgebildeten Senkungen 20 oder in die in den Außenbereichen des Stators 1 liegenden Senkungen 28,29 einpressbar sind, werden die Wälzlager 4 gefügt. Die Senkungen 20,28 sowie 29 bilden jeweils einen Lagersitz 21 des Lagerringes 2, welcher im Ausführungsbeispiel gemäß der Darstellung in Figur 1 in die an der Statorinnenseite liegenden Senkungen 20 eingepresst ist. Die aneinander gefügten Lagerringe 2 samt Wälzlager 4 werden stirnseitig in die Senkungen 20,28,29 eingepresst, wonach der Rotor 7 in den Stator 1 gefügt wird und die Welle 5 in die Innenringe der Wälzlager 4 einpresst wird. Dies erfolgt an beiden Wellenenden. Der Lagerring 2 bildet eine Ebene im Luftspalt 15 des Rotors 7, wenn in den Senkungen 20 an der Innenseite des Stators 1 eingepresst.

Die Länge des Lamellenpaketes Stator 1 und Rotor 7 ist identisch, so dass der Luftspalt 15 über die gesamte Paketlänge realisiert ist. Dadurch lassen sich eventuelle Leistungsverluste durch die Senkungen 20 an der Innenseite der Statorbohrung liegend, weitestgehend vermeiden. Ebenso bleibt der Stanzprozess weiterhin wirtschaftlich und es werden Längenunterschiede zwischen dem durch Stator 1 und Rotor 7 gebildeten Lamellenpaket vermieden, die den Stanzabfall erhöhen würden. Bezugszeichen 8.1 bezeichnet einen Kurzschlussring am Rotor 7, der an diesen stirnseitig angespritzt ist. Der Kurzschlussring 8.1 kann beispielsweise aus Aluminium gefertigt werden.

Der Werkstoff der eingesetzten Lagerringe 2 ist amagnetisch bzw. nicht elektrisch leitend, um einen Einfluss auf das elektrische Drehfeld in den Wickelköpfen zu vermeiden.

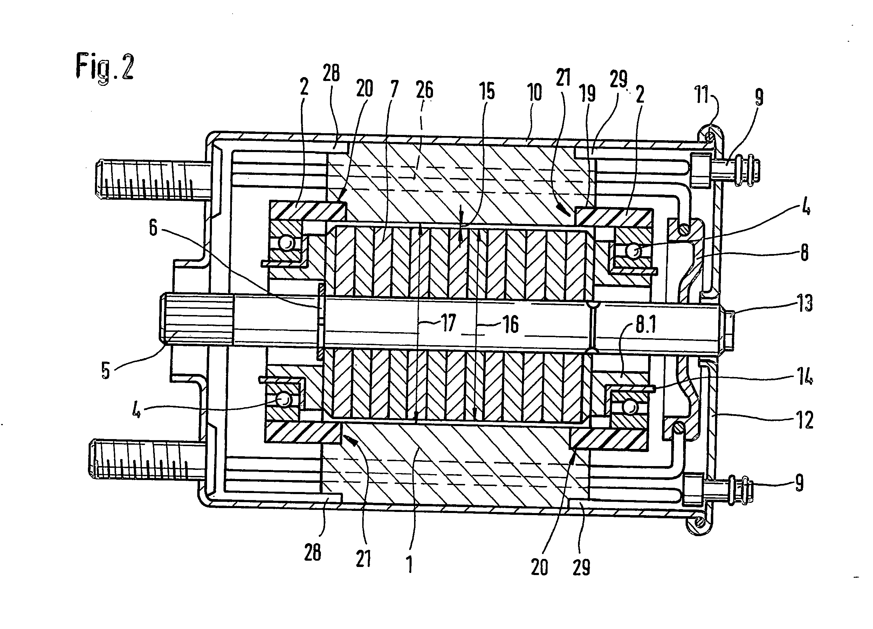

Figur 2 zeigt ein zweites Beispiel einer in den Stator integrierten Rotorlagerung.

Aus der Darstellung gemäß Figur 2 geht hervor, dass der Stator 1 in einem zylindrisch ausgebildeten Gehäuse 10 des Elektromotors aufgenommen ist, welches mittels einer Runddichtung 11 zwischen Gehäusedeckel 12 (Motorschild) und zylindrischem Gehäuse 10 verschlossen ist. Der Stator 1 der elektrischen Maschine ist von Durchgangsöffnungen 26 zur Aufnahme der Wicklungsdrähte beziehungsweise der Kontaktstifte 9 durchzogen. Die Kontaktstifte 9 stehen aus dem Gehäusedeckel 12 (Motorschild) der elektrischen Maschine hervor.

Der Rotor 7 umfasst die Welle 5, die durch Wälzlager 4 drehbar gelagert ist. Die Wälzlager 4 stützen sich auf Lagerringen 2 ab, die ihrerseits in Senkungen 20,28 oder 29 an den Stirnseiten des Stators 1 analog zur in Figur 1 dargestellten Ausführungsvariante, gelagert sind.
Der Rotor 7 umfasst analog zur in Figur 1 dargestellten ersten Ausführungsvariante die Welle 5. An die Stirnseite des Rotors 7 ist der eingespritzte Kurzschlussring 8.1 aufgenommen. Über den Gehäusedeckel 12 durchsetzende Kontaktstifte 9 erfolgt die Bestromung der Wicklungen des Stators 1 der elektrischen Maschine in der Ausführungsvariante gemäß Figur 2.

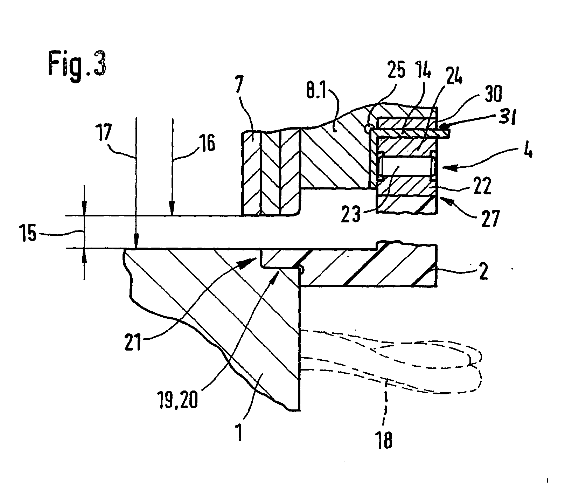

Nach Fügen der Wälzlager 4 in die Lagerringe 2, werden die mit den Wälzlagern 4 versehenen Lagerringe 2 in die als umlaufende Ringnuten 19 ausbildbaren Senkungen 20,28,29 an den Stirnseiten des Stators 1 gefügt. Beim Fügen des Rotors 7 in der in einem Innendurchmesser 17 ausgebildeten Bohrung des Stators 1 wird ein Kurzschlussring 8.1 eingesetzt, der bevorzugt aus Aluminium gefertigt wird und eine vom Wärmedehnverhalten von Stahl abweichendes Wärmedehnungsverhalten aufweist und dessen Dehnungsverhalten verschieden von dem des Wälzlagerinnenringes 24 ist. Der Kurzschlussring 8.1 bildet einen Lagersitz 27 für das Wälzlager 4. Zwischen dem Wälzlager 4 und dem Kurzschlussring 8.1 kann - wie in Figur 2 dargestellt - eine Lagerisolierung 14 aufgenommen sein. In den Kurzschlussring 8.1, der an der Stirnseite des Rotors 7 angespritzt ist, kann ein Dehnring 30 eingespritzt werden (Vergleiche Darstellung gemäß Figur 3).

Da der Kurzschlussring 8.1 zwischen der Welle 5 des Rotors 7 und dem Wälzlager 4 stromführend ist, wird eine Lagerisolierung 14 vorgesehen, die zwischen dem Wälzlagerinnenring 24 des Wälzlagers 4 und dem Kurzschlussring 8.1 eingelassen ist. Auf die Lagerisolierung 14 kann verzichtet werden, wenn Wälzlager 4 eingesetzt werden, deren Innenringe 24 nicht elektrisch leitende Wälzkörperlaufbahnen für Wälzkörper 23 aufweisen (vgl. Darstellung gemäß Figur 3).

Figur 3 zeigt eine Darstellung der in den Stator integrierten Rotorlagerung in einem vergrößerten Maßstab.

Aus der Darstellung gemäß Figur 2 geht hervor, dass die die Wälzlager 4 aufnehmenden Lagerringe 2 an den Stirnseiten des Stators 1 in umlaufende Senkungen 20,28,29, die als Ringnuten 19 ausgebildet sein können, eingelassen sind. Die Senkungen 20,28,29 können analog zum in Figur 1 dargestellten Beispiel sowohl an der Innenumfangsseite beziehungsweise auch an der Außenumfangsseite des Stators 1 ausgebildet werden. Das Wälzlager 4 - hier ausgebildet als Rollenlager - umfasst einen Wälzlagerinnenring 24, der auf dem Kurzschlussring 8.1 aufgenommen ist. Im Bereich eines Lagersitzes 31 des Wälzlagers 4 auf dem Kurzschlussring 8.1 ist ein Freistich 25 vorgesehen, so dass der Wälzlagerinnenring 24 des Wälzlagers 4 flächig aufsitzt. Das Wälzlager 4 umfasst einen als Zylinder ausgebildeten Wälzkörper 23 sowie einen Wälzlageraußenring 22. Der Wälzlageraußenring 22 ist an einem Lagersitz 27 des Lagerringes 2 aufgenommen. Mit dem Bezugszeichen 18 sind Teile der Wicklungen des Stators 1 bezeichnet. Der sich zwischen dem Außendurchmesser 16 des Rotors 7 und dem Innendurchmesser 17 der Bohrung des Stators 1 ergebende Luftspalt ist durch Bezugszeichen 15 gekennzeichnet. Der Stator 1, der Lagerring 2 und das in diesem eingefügte Wälzlager 4 können vormontiert werden, wodurch sich aufgrund der Durchmesserdifferenz zwischen dem Außendurchmesser 16 des Rotors 7 und dem Innendurchmesser 17 der Bohrung im Stator 1 ein definierter Luftspalt 15 innerhalb einer derart vormontierten Montagebaugruppe einstellt. Der sich während der Vormontage einstellende Luftspalt 15 bleibt während der Montage der vormontierten Baugruppe, den Stator 1, den Rotor 7, den Lagerungsring 2, den Kurzschlussring 8.1 sowie das Wälzlager 4 umfassend, eingestellt und wird durch die Montage dieser Baugruppe im Gehäuse 10 nicht verändert. Die vormontierte Montageeinheit gestattet im Fertigungsprozess eine Überprüfung des Luftspaltes 15, einen sicheren Freilauf des Rotors 7 vor der abschließenden Montage dieser Monatgeeinheit im Gehäuse 10 und dem sich anschließenden Verschließen des Gehäusedeckels 12 am zylindrischen Gehäuseteil mittels einer Runddichtung 11, wie aus Figur 2 hervorgeht.

Als Beispiel für die Auslegung des Luftspaltes 15 lassen sich folgende Werte nennen: Bei einem Außendurchmesser 16 des Rotors 7 von 49,8 mm toleranzbehaftet um +/- 0,03 mm und einem Innendurchmesser 17 der Bohrung im Stator 1 von 50 mm +/- 0,03 mm stellt sich ein Luftspalt 15 von 0,1 mm mit einem Übermaß von maximal 0,070 mm oder einem Untermaß von maximal 0,055 mm jeweils ein. Diese Werte für den Luftspalt 15 werden dadurch erreicht, dass die Toleranzkette der beteiligten Bauteile durch den Wegfall toleranzbehafteter Bauteile minimiert ist. Durch die Lagerringe 2 sowie die in diese integrierten Wälzlager 4 kann innerhalb des Fertigungsprozesses ein Luftspalt 15 vor der Aufnahme dieser Montageeinheit in das Gehäuse 10 und der Montage des Gehäusedeckels 12 definiert eingestellt werden. Dadurch kann bei der Auslegung z.B. einer Asynchronmaschine konstruktiv ein reduzierter Luftspalt 15 realisiert werden, der den elektrischen Wirkungsgrad einer solcher Art beschaffenen elektrischen Maschine positiv beeinflusst. Die erfindungsgemäß vorgeschlagene Lösung ermöglicht eine höhere Maßhaltigkeit hinsichtlich der Konzentrizität und Winkelfehlern des Rotors 7 in der Bohrung des Stators 1. Die bisherigen Auslegungen aufgrund von Sicherheitserwägungen zur Vermeidung der Streifgefahr folgten der Auswahl höherer Toleranzen hinsichtlich der Gehäuselagerung, was zu einem erhöhten Luftspaltmaß führte. Die Toleranzkette, welche das Maß und die Konzentrizität des Luftspaltes 15 zwischen Stator 1 und Rotor 7 beeinflusst, ist im wesentlichen durch die Toleranz gegeben, in der die die Lagerungsringe 2 aufnehmenden Senkungen 20,28,29 an den Stirnseiten des Stators 1 ausgebildet werden. Als weiteres Glied innerhalb der Toleranzkette ist der Wälzlagersitz 27 am Lagerring 2 zu nennen und gegebenenfalls ein Dehnring, der durch das Bezugszeichen 30 gekennzeichnet ist, welcher thermisch bedingte, sich im Betrieb der elektrischen Maschine einstellende Toleranzen ausgleicht. Dem Ausgleich sich bei Erwärmung der elektrischen Maschine einstellender Dehnungen kann über den Einsatz des Dehnringes 30, eingespritzt in den Kurzschlussring 8.1 oder als Isolierung 14 ausgebildet, im Bereich des Wälzlagerinnenrings 24 des Wälzlagers 4 Rechnung getragen werden.

### Bezugszeichenliste

- 1: Stator
- 2: Lagerring
- 3: Isolierscheibe
- 4: Wälzlager
- 5: Welle
- 6: Sicherungsring
- 7: Rotor
- 8: Kurzschlussring Statorphasen
- 8.1: Kurzschlussring vom Rotor 7, aus Aluminium stirnseitig angespritzt
- 9: Kontaktstift
- 10: Gehäuse
- 11: Runddichtung
- 12: Gehäusedeckel
- 13: Magnetscheibe
- 14: Lagerisolierung mit Dehnringfunktion
- 15: Luftspalt
- 16: Außendurchmesser Rotor
- 17: Innendurchmesser Statorbohrung
- 18: Wicklungsteil
- 19: Umfangsnut
- 20: Stirnseitige Senkung
- 21: Lagersitz der Lagerringe 2
- 22: Wälzlageraußenring
- 23: Wälzkörper
- 24: Wälzlagerinnenring
- 25: Freistich
- 26: Durchgangsbohrung Kontaktstift
- 27: Wälzlagersitz
- 28: Stirnseitige Senkung Stator außen
- 29: Stirnseitige Senkung Stator außen
- 30: Dehnring
- 31: Lagersitz des Kurzschlussringes 8.1

## Patentansprüche

1. Elektrische Maschine mit einem Stator (1), der in einem Gehäuse aufgenommen ist, welches durch einen Gehäusedeckel verschlossen ist und einen Rotor (7), der eine Welle (5) umfasst, die in Wälzlagern (4) drehbar aufgenommen ist, und die Wälzlager (4) von Langerringen (2) aufgenommen sind, die im Stator (1) der elektrischen Maschine gelagert sind, **dadurch gekennzeichnet, dass** der Stator (1) an seinen Stirnseiten am Statoraußendurchmesser stirnseitige Senken (28, 29) aufweist, in die die Lagerringe (2) eingelassen ist.

2. Elektrische Maschine gemäß Anspruch 1, **dadurch gekennzeichnet, dass** die Senkungen (20, 28, 29) als in Umfangrichtung verlaufende Ringnuten ausgebildet sind.

3. Elektrische Maschine gemäß Anspruch 1, **dadurch gekennzeichnet, dass** die Lagerringe (2) aus einem nicht-magnetischen Werkstoff gefertigt sind.

4. Elektrische Maschine gemäß Anspruch 1, **dadurch gekennzeichnet, dass** zwischen den Wälzlagern (4) und einem Kurzschlussring (8.1) des Rotors (7) Lagerisolierungen (14) angeordnet sind.

5. Elektrische Maschine gemäß Anspruch 4, **dadurch gekennzeichnet, dass** die Lagerisolierung (14) als Dehnring ausgebildet und im Bereich eines Wälzlagerinnenringes (24) des Wälzlagers (4) angeordnet ist.

6. Elektrische Maschine gemäß Anspruch 1, **dadurch gekennzeichnet, dass** die Wälzlager (4) Innenringe (24) aufweisen, die nicht elektrisch leitende Laufflächen für Wälzkörper (23) aufweisen.

7. Elektrische Maschine gemäß Anspruch 1, **dadurch gekennzeichnet, dass** ein Kurzschlussring (8.1) einen Lagersitz (31) darstellend, in den Wälzlagerinnenring (24) des Wälzlagers (4) eingepresst ist.

8. Verfahren zur Montage einer elektrischen Maschine mit einem Stator (1), der in einem Gehäuse aufgenommen ist, welches durch einen Gehäusedeckel verschlossen ist und einen Rotor (7), der eine Welle (5) umfasst, die in Wälzlagern (4) drehbar aufgenommen ist, und die Wälzlager (4) von Lagerringen (2) aufgenommen sind, die im Stator (1) der elektrischen Maschine gelagert sind, **dadurch gekennzeichnet, dass** Senkungen (28, 29) in den Außenbereichen der Stirnseiten des Stators (1) gleichzeitig mit dem Stanzprozess der Herstellung der Lamellen eines Wicklungslamellenpakets ausgestanzt werden.

9. Verfahren gemäß Anspruch 8, **dadurch gekennzeichnet, dass** Wälzlager (4) mit den Lagerringen (2) gefügt werden, bevor die Lagerringe (2) in die Senkungen (20,28,29) an den Stirnseiten des Stators (1) eingepresst werden.

10. Verfahren gemäß Anspruch 8, **dadurch gekennzeichnet, dass** beim Fügen des Rotors (7) in den Stator (1) ein Kurzschlussring (8.1) als Lagersitz in den Wälzlagerinnenring (24) des Wälzlagers (4) eingepresst wird.

11. Verfahren gemäß Anspruch 8, **dadurch gekennzeichnet, dass** ein Dehnring (30) im Bereich des Wälzlagerinnenringes (24) des Wälzlagers (4) eingespritzt wird.

## Claims

1. Electrical machine with a stator (1), which is accommodated in a housing, which is closed by a housing cover, and a rotor (7), which comprises a shaft (5), which is accommodated rotatably in roller bearings (4), and the roller bearings (4) are accommodated by bearing rings (2), which are mounted in the stator (1) of the electrical machine, **characterized in that** the stator (1) has end-side depressions (28, 29) at its end sides on the stator outer diameter, the bearing rings (2) being let into said depressions.

2. Electrical machine according to Claim 1,
**characterized in that** the depressions (20, 28, 29) are in the form of annular grooves running in the circumferential direction.

3. Electrical machine according to Claim 1,
**characterized in that** the bearing rings (2) are manufactured from a nonmagnetic material.

4. Electrical machine according to Claim 1,
**characterized in that** bearing insulation (14) is arranged between the roller bearings (4) and a short-circuiting ring (8.1) of the rotor (7).

5. Electrical machine according to Claim 4,
**characterized in that** the bearing insulation (14) is in the form of an expanding ring and is arranged in the region of a roller bearing inner ring (24) of the roller bearing (4).

6. Electrical machine according to Claim 1,
**characterized in that** the roller bearings (4) have inner rings (24), which have electrically nonconductive running faces for rolling bodies (23).

7. Electrical machine according to Claim 1,
**characterized in that** a short-circuiting ring (8.1), representing a bearing seat (31), is pressed into the roller bearing inner ring (24) of the roller bearing (4).

8. Method for fitting an electrical machine with a stator (1), which is accommodated in a housing, which is sealed by a housing cover, and a rotor (7), which comprises a shaft (5), which is accommodated rotatably in roller bearings (4), and the roller bearings (4) are accommodated by bearing rings (2), which are mounted in the stator (1) of the electrical machine, **characterized in that** depressions (28, 29) in the outer regions of the end sides of the stator (1) are stamped out at the same time as the stamping process for producing the laminates of a winding laminate stack.

9. Method according to Claim 8, **characterized in that** roller bearings (4) are joined to the bearing rings (2) before the bearing rings (2) are pressed into the depressions (20, 28, 29) at the end sides of the stator (1).

10. Method according to Claim 8, **characterized in that**, when the rotor (7) is joined into the stator (1), a short-circuiting ring (8.1) as the bearing seat is pressed into the roller bearing inner ring (24) of the roller bearing (4).

11. Method according to Claim 8, **characterized in that** an expanding ring (30) is injection-moulded in the region of the roller bearing inner ring (24) of the roller bearing (4).

## Revendications

1. Machine électrique comportant un stator (1) logé dans un boîtier fermé par un couvercle de boîtier et un rotor (7) ayant un arbre (5) monté à rotation dans des paliers à roulement (4) et ces derniers sont logés dans des bagues de palier (2) montées dans le stator (1) de la machine électrique,
**caractérisée en ce que**
les faces frontales du stator (1) ont des enfoncements (28, 29) dans lesquels sont logées les bagues de palier.

2. Machine électrique selon la revendication 1,
**caractérisée en ce que**
les enfoncements (20, 28, 29) sont réalisés sous la forme de rainures annulaires dans la direction périphérique.

3. Machine électrique selon la revendication 1,
**caractérisée en ce que**
les bagues de palier (2) sont fabriquées en une matière amagnétique.

4. Machine électrique selon la revendication 1,
**caractérisée par**
des isolations de palier (14) entre les paliers à roulement (4) et une bague de court-circuit (8.1) du rotor (7).

5. Machine électrique selon la revendication 4,
**caractérisée en ce que**
l'isolation de palier (14) est une bague extensible installée dans la région de la bague intérieure (24) du palier de roulement (4).

6. Machine électrique selon la revendication 1,
**caractérisée en ce que**
les paliers de roulement (4) ont des bagues intérieures (24) qui ont des surfaces de roulement non électroconductrices pour les organes de roulement (23).

7. Machine électrique selon la revendication 1,
**caractérisée en ce qu'**
une bague de court-circuit (8.1) constituant un siège de palier (31) est enfoncée de force dans la bague intérieure (24) du palier à roulement (4).

8. Procédé de montage d'une machine électrique comportant un stator (1) logé dans un boîtier fermé par un couvercle de boîtier et ayant un rotor (7) muni d'un arbre (5) logé à rotation dans des paliers à roulement (4) et ces derniers sont logés dans des bagues de palier (2) montées dans le stator (1) de la machine électrique,
**caractérisé par**
des enfoncements (28, 29) réalisés dans les zones extérieures des faces frontales du stator (1), simultanément avec le procédé d'emboutissage servant à la fabrication des lamelles d'un paquet de lamelles d'enroulement.

9. Procédé selon la revendication 8,
**caractérisé en ce qu'**
on assemble les paliers de roulement (4) aux bagues de palier (2) avant de presser les bagues de palier (2) dans les enfoncements (20, 28, 29) des faces frontales du stator (1).

10. Procédé selon la revendication 8,
**caractérisé en ce qu'**
à l'assemblage du rotor (7) dans le stator (1) on enfonce de force une bague de court-circuit (8.1) comme siège de palier dans la bague intérieure (24) du palier de roulement (4).

11. Procédé selon la revendication 8,
**caractérisé en ce qu'**
une bague extensible (30) est injectée dans la région de la bague intérieure (24) du palier de roulement (4).
